# EUROPEAN PATENT APPLICATION

(11) **EP 3 741 661 A1**
(43) Date of publication of application: **25.11.2020**
(21) Application number: 18900776.8
(22) Date of filing: 19.01.2018
(51) Int. Cl.: B64C 1/00, B64C 39/02, B64D 47/00, B64D 47/08

(54) **ANMANNED AERIAL VEHICLE**

(71) Applicant: SZ DJI Technology Co., Ltd., Shenzhen, Guangdong 518057 (CN)
(72) Inventor: LIN, Tao, Shenzhen, Guangdong 518057 (CN); FENG, Jiangang, Shenzhen, Guangdong 518057 (CN); HUANG, Tongyao, Shenzhen, Guangdong 518057 (CN)
(74) Representative: Goddar, Heinz J.
(86) International application number: PCT/CN2018/073511
(87) International publication number: WO 2019/140659

(57) **Abstract**

The present disclosure provides an unmanned aerial vehicle including a casing, a circuit board assembly housed in the casing, and a load disposed at the casing. The circuit board assembly comprises a circuit board and an inertial measurement assembly provided at the circuit board. The casing is internally formed with a support plate for connecting the circuit board. The casing comprising a first end portion and a second end portion away from the first end portion. The first end portion of the casing is provided with a load and the second end portion is provided with a first accommodation chamber. The first accommodation chamber is recessed with respect to the support plate and the inertial measurement assembly is housed within the first accommodation chamber. The location of the inertial measurement assembly on the casing is arranged using the structural characteristics of the casing, thus saving space and being compact in integral structure.

## Description

### TECHNICAL FIELD

The present disclosure relates to an unmanned aerial vehicle (UAV).

### BACKGROUND

An inertial measurement assembly is used to detect attitude information of a moving object. The inertial measurement assembly generally includes an accelerometer and a gyroscope. The accelerometer is used to detect the acceleration component of the object, and the gyroscope is used to detect the angle information of the object. Due to its ability to measure the three-axis attitude angle (or angular rate) and acceleration of objects, inertial measurement assemblies are usually used as the core components of navigation and guidance, and are widely used in vehicles, ships, robots, and aircrafts that require motion control.

The inertial measurement assembly is usually mounted at the body of the UAV. A fixed structure needs to be designed to fix the inertial measurement unit. The inertial measurement assembly, the circuit board and other structures need to avoid each other. Therefore, quite a big space is required, which is not conducive to miniaturization design requirements.

### SUMMARY

The present disclosure provides an unmanned aerial vehicle (UAV) with a compact design space to solve the above technical problems.

In accordance with the disclosure, there is provided a UAV, which includes a casing, a circuit board assembly housed in the casing, and a load disposed at the casing. The circuit board assembly includes a circuit board and an inertial measurement assembly provided at the circuit board. A support plate for connecting the circuit board is formed in the casing. The casing includes a first end portion and a second end portion away from the first end portion. The first end portion of the casing is provided with a load, and the second end portion is provided with a first accommodation chamber. The first accommodation chamber is recessed relative to the support plate and the inertial measurement assembly is housed in the first accommodation chamber.

The above inertial measurement assembly is directly arranged at the circuit board without other special structural parts to fix it, which saves space and facilitates the need for integrated design. At the same time, the second end portion of the casing is provided with the first accommodation chamber for accommodating the inertial measurement assembly. The location of the inertial measurement assembly on the casing is arranged using the structural characteristics of the casing. Therefor the space of the casing is fully used for layout and the overall structure is compact.

### BRIEF DESCRIPTION OF THE DRAWINGS

To more clearly illustrate the technical solution of the present disclosure, the accompanying drawings used in the description of the disclosed embodiments are briefly described below. The drawings described below are merely some embodiments of the present disclosure. Other drawings may be derived from such drawings by a person with ordinary skill in the art without creative efforts.
FIG. 1 is a schematic diagram of an unmanned aerial vehicle and a circuit board assembly according to an embodiment of the disclosure.
FIG. 2 is a schematic diagram of the circuit board assembly shown in FIG. 1.
FIG. 3 is a schematic exploded view of the inertial measurement assembly shown in FIG. 1.
FIG. 4 is a schematic diagram of an elastic component of the inertial measurement assembly shown in FIG. 1.

### DETAILED DESCRIPTION OF THE EMBODIMENTS

The technical solutions in the example embodiments of the present disclosure will be described clearly and completely with reference to the accompanying drawings. The described embodiments are only some of the embodiments of the present disclosure, rather than all the embodiments. Based on the embodiments of the present disclosure, all other embodiments obtained by a person of ordinary skill in the art without creative efforts shall fall within the scope of the present disclosure.

Example embodiments will be described with the reference to the accompanying drawings, in which the same numbers refer to the same or similar elements unless otherwise specified. The implementations described in the following example embodiments do not represent all implementations consistent with the present disclosure. Rather, they are merely examples of devices and methods consistent with some aspects of the invention as detailed in the appended claims.

The terminology used in the present disclosure is for the purpose of describing particular embodiments only and is not to limit the present disclosure. The singular forms "a," "said," and "the" as used in this disclosure include the plural forms, unless the context clearly indicates otherwise. The term "and/or" refers to any or all possible combinations of one or more of the associated items.

The UAV of the present disclosure will be described in detail below with reference to the accompanying drawing. In the case of no conflict, the following embodiments and features in the embodiments can be combined with each other.

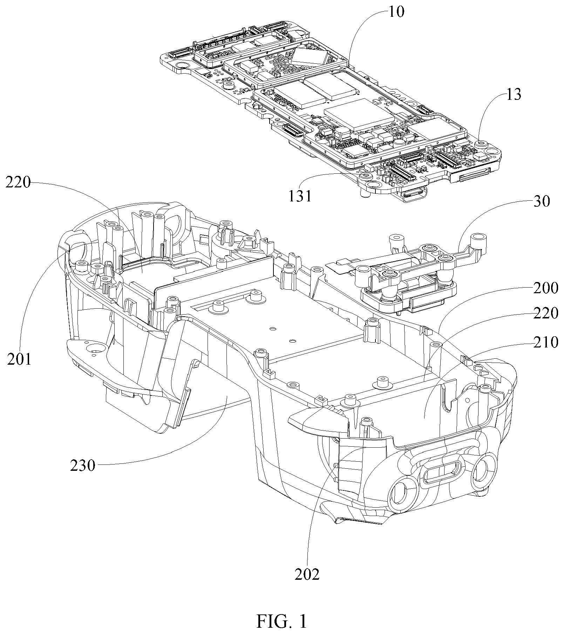

FIG. 1 is a schematic diagram of a UAV casing 200 and a circuit board assembly 100 according to an embodiment of this disclosure. The UAV of the embodiment of the present disclosure includes the casing 200, the circuit board assembly 100 housed in the casing 200, and a load (not shown) disposed at the casing 200. The circuit board assembly 100 includes a circuit board 10 and an inertial measurement assembly 30 provided at the circuit board 10.

Referring to FIG. 1, in this embodiment, the casing 200 includes a first end portion 201 and a second end portion 202 away from the first end portion 201. The first end portion 201 of the casing 200 is provided with an accommodation chamber 220 to receive a load (not shown). The second end portion 202 of the casing 200 is provided with a rear-view binocular. The first end portion 201 is opposite to the second end portion 202. A battery compartment 230 is recessed in a middle position between the first end portion 201 and the second end portion 202 of the casing 200 to receive a battery (not shown). Storing the battery in the middle position is beneficial for maintaining the center of gravity of the UAV.

A support plate 220 for connecting the circuit board 10 is formed in the casing 200. The second end portion 202 is provided with a first accommodation chamber 210. Relative to the support plate 220, the first accommodation chamber 210 is recessed toward the bottom of the casing 200, and the inertial measurement assembly 30 is housed in the first accommodation chamber 210. Since the inertial measurement assembly 30 is directly arranged at the circuit board 10, no other special structural parts are needed to fix the inertial measurement assembly 30, which saves space and facilitates the design needs for miniaturization. At the same time, the first accommodation chamber 210 of the casing 200 is used to house the inertial measurement assembly 30. The structural characteristics of the casing 200 are used to set the position of the inertial measurement assembly 30 on the casing 200. Therefore, the space of the casing 200 is fully utilized, the layout is reasonable, and the overall structure is compact.

Referring to FIG. 1, in this embodiment, the casing 200 has an elongated shape. The first end portion 201 is the nose of the UAV 100, and the second end portion 202 is the tail of the UAV 100. The load is disposed at the first end portion 201 of the casing 200. Specifically, an accommodation chamber 220 may be provided at the bottom of the first end portion 201 of the casing 200 toward the inside of the casing 200 for receiving the load. Correspondingly, the first accommodation chamber 210 is disposed at the second end portion 202 of the casing 200. The load may include a gimbal, which is used to support a photographing device (such as a camera, a video camera, an infrared camera, an ultraviolet camera, etc.), an audio capturing device, or another sensor. Further, the gimbal can be a two-axis gimbal or a three-axis gimbal, so that the UAV 100 can have multiple different shooting angles by adjusting the gimbal to rotate along different axes. The load may also include other equipment, which is not limited here.

In another embodiment, the first end portion 201 may be the tail of the UAV 100 and the second end portion 202 may be the nose of the UAV 100. That is, in this embodiment, the load is located at the tail of the UAV 100, and the first accommodation chamber 210 is located at the nose of the UAV 100. It can be specifically set according to the model and body design of the UAV, and the use requirements, which are not limited here.

A cover (not shown) may be further provided above the casing 200, and the cover is used to enclose the circuit board assembly 100 in the casing 200.

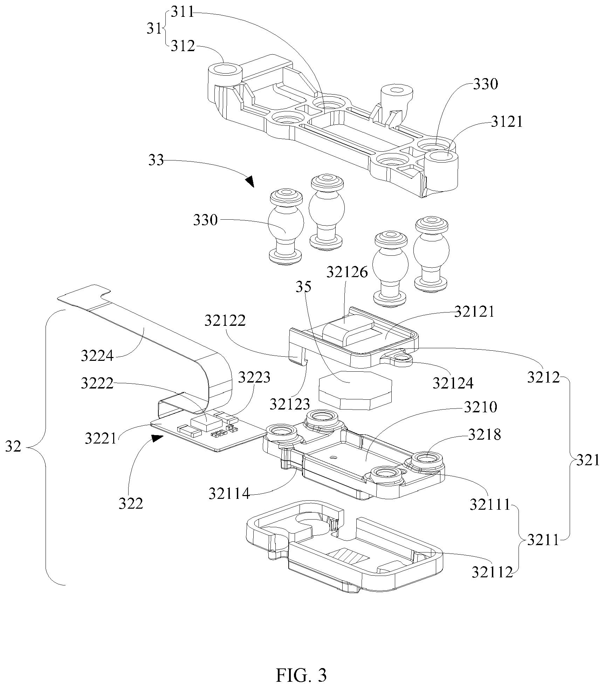

Referring to FIG. 3, the inertial measurement assembly 30 includes a mounting bracket 31, an inertial measurement unit 32, and a shock absorption mechanism 33 connecting the mounting bracket 31 and the inertial measurement unit 32. The mounting bracket 31 is used for mounting the inertial measurement assembly 30 at the circuit board 10.

In the above embodiment, the mounting bracket 31 includes a main body 311 that fits with the shock absorption mechanism 33 and a mounting portion 312 provided at an edge of the main body 311. The mounting portion 312 is used to mount the inertial measurement assembly 30 at the circuit board 10.

In an embodiment, the mounting portion 312 protrudes from the main body 311 toward the circuit board 10, so that there is a certain distance between the main body 311 and the circuit board 10, and thus the inertial measurement unit 32 has a certain moving space. Therefore, when the UAV 100 impacts, the inertial measurement unit 32 will not collide with the electronic components on the circuit board 10 and affect its performance.

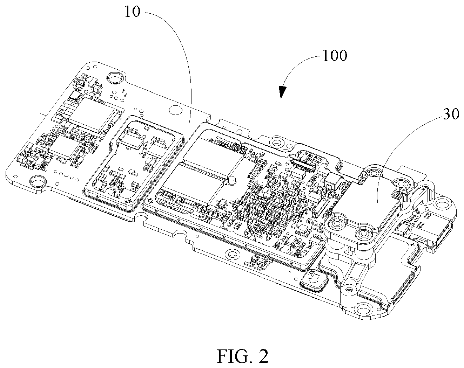

Referring to FIGs. 1 to 3, the circuit board 10 is provided with a stud 13. The mounting portion 312 and the stud 13 are fixed together by a fastener. Specifically, the mounting portion 312 is provided with a connection hole 3121. The mounting portion 312 is sleeved on the outside of the stud 13 through the connection hole 3121 and fitted with a screw hole 131 of the stud 13 by a fastener such as a screw, so that the inertial measurement assembly 30 is fixed to the circuit board 10.

In some embodiments, the circuit board 10 is provided with a through hole, and the mounting portion 312 is provided with a threaded hole. A screw passes through the through hole of the circuit board 10 and fits with the threaded hole of the mounting portion 312.

In some other embodiments, the mounting bracket 31 may also be fixed to the circuit board 20 by snapping, bonding, soldering, or the like.

In the illustrated embodiment, the stud 13 can be fixed at the circuit board 10 by reflow soldering, which is not limited here. In this embodiment, three studs 13 are provided, of which two studs 13 are near two corners of one end of the circuit board 10 and another stud 13 is provided at a middle position of the circuit board 10. The three studs 13 form an isosceles or equilateral triangle. When the mounting portion 312 of the mounting bracket 31 is fixed with the three studs 13, it can provide stable support for the inertial measurement assembly 30. In other embodiments, the number of studs 13 and positions on the circuit board 10 may be determined according to specific design requirements, which are not limited here. For example, the number of the studs 13 may also include 2, 4 and so on.

In another embodiment, the inertial measurement assembly 30 includes an inertial measurement unit 32 and a shock absorption mechanism 33. In this embodiment, the shock absorption mechanism 33 is directly connected between the inertial measurement unit 32 and the circuit board 10 without a mounting bracket.

Referring to FIG. 3, the inertial measurement unit 32 includes a protective casing 321 and an inertial measurement module 322 disposed in the protective casing 321. The shock absorption mechanism 33 is connected to the protective casing 321.

The protective casing 321 includes an upper casing 3211 and a lower casing 3212 that matches with the upper case 3211. The inertial measurement module 32 is disposed between the upper casing 3211 and the lower casing 3212. The protective casing 321 is provided with an accommodation chamber 3210 for receiving the inertial measurement module 322. The accommodation chamber 3210 may be provided in the upper casing 3211 or the lower casing 3212, or partly provided in the upper casing 3211 and partly provided in the lower casing 3212. In the illustrated embodiment, the accommodation chamber 3210 is disposed in the upper casing 3211, and the inertial measurement unit 32 can be fixed in the accommodation chamber 3210 by double-sided adhesive bonding, glue fixing, screw fixing, and the like.

In some embodiments, the upper casing 3211 includes an inner casing 32111 and an elastic casing 32112 covering the inner casing 32111. The accommodation chamber 3210 is disposed at the inner casing 32111. The elastic casing 32112 is used to reduce the impact on the peripheral side of the inertial measurement unit 32. The elastic casing 32112 is made of some elastic material. In the illustrated embodiment, the elastic casing 32112 is made of low-hardness silicone rubber. The silicone rubber can be heated and injected to cover the inner casing 32111. In some other embodiments, other elastic materials such as foam, thermoplastic elastomer, and etc. can be adopted, and they are not limited to these. The inner casing 32111 may be a plastic casing or a low-hardness metal casing. In this embodiment, a plastic casing is used as the inner casing 32111 to reduce the self-weight of the inertial measurement unit 32 and contribute to the weight reduction of the UAV.

Referring to FIG. 3, the lower casing 3212 includes a main body portion 32121 and a pair of holding arms 32122. The main body portion 32121 may be in a square shape. The pair of holding arms 32122 are oppositely disposed at both sides of the main body portion 32121 and used for holding and matching with the upper casing 3211, so that the inertial measurement module 322 can be enclosed and fixed. In this embodiment, the holding arm 32122 is an elastic structure. A hook 32123 is provided at the inner side of the free end of the holding arm 32122, and a slot 32114 matching with the hook 32123 is provided at the upper casing 3211. When the upper casing 3211 and the lower casing 3212 are assembled, the holding arm 32122 clamps the upper casing 3211 and the hook 32123 is fitted in the slot 32114, so that the upper casing 3211 and the lower casing are assembled. During disassembly, the external force acts on the holding arm 32122 and the holding arm 32122 elastically deforms outward, so that the hook 32123 is separated from the slot 32114. Therefore, the upper casing 3211 and the lower casing 3212 can be separated.

In some embodiments, a connecting portion 32124 is further extended on one side of the lower casing 3212. The connecting portion 32124 and the corresponding portion of the upper casing 3211 are connected by fasteners. In this way, the upper and lower casings are fixed by fasteners and the holding arms 32122.

In the illustrated embodiment, the inertial measurement module 322 includes a control circuit board 3221, an inertial measurement body 3222 disposed at the control circuit board 3221, a thermal resistor 3223, and a connection line 3224 connected to the circuit board 10 of the UAV. The thermal resistor 3223 is provided around the inertial measurement body 3222. The inertial measurement body 3222 and the thermal resistor 3223 are located on the opposite side of the control circuit board 3221 and the lower casing 3212. One end of the connection line 3224 is connected to the control circuit board 3221 and the other end is connected to the circuit board 10, so that a communication is established between the control circuit board 3221 and the circuit board 10 of the UAV. In some embodiments, the connection line 3224 uses FPC (Flexible Printed Circuit) to save space.

The inertial measurement unit 32 further includes a thermal conductive structure 35, which is disposed between the inertial measurement module 322 and the lower casing 3212. The upper casing 3211 matching with the lower casing 3212 encloses the inertial measurement module 322 and the thermal conductive structure 35. In this embodiment, the thermal conductive structure 35 is made of thermal conductive silicone grease, which is used to cover the inertial measurement body 3222 and the thermal resistor 3223, and transfer the heat generated by the thermal resistor 3223 to the inertial measurement body 3222. Therefore, the inertial measurement body 3222 can work at a constant temperature with the heat insulation and its working stability can be enhanced. In other embodiments, the thermal conductive structure 35 can be made of other thermal insulation materials, which are not limited to the thermal conductive silicone grease.

In some embodiments, the lower casing 3212 is further provided with a locking member 32126 extending in a direction away from the upper casing 3211, which is used to lead out the connection line 3224 from below the lower casing 3212 and restrict the connection line 3224 under the lower casing 3212. Therefore, the stress generated by the inertial measurement body 3222 and the connection line 3224 in use can be reduced.

Referring to FIG. 3, the shock absorption mechanism 33 includes a plurality of elastic members 330, and the plurality of elastic members 330 are respectively disposed at the edges of the protective casing 321. Each of the elastic members 330 is disposed between the mounting bracket 30 and the protective casing 321 for damping on the inertial measurement module 322. The distance between two adjacent elastic members 330 can be set according to specific design requirements.

In one embodiment, a plurality of elastic members 330 are evenly arranged between the mounting bracket 30 and the protective casing 321 to achieve a better shock absorption effect. One end of the elastic member 330 is connected to the mounting bracket 30, and the other end is connected to the protective casing 321. When the UAV is impacted, the vibration is transmitted to the inertial measurement module 322 through the elastic member 330 with the deformation buffering to achieve the effect of damping. In the illustrated embodiment, the protective casing 321 is approximately a square. Four elastic members 330 are provided, which are arranged at opposite corners of the protective casing 321, respectively. The number and arrangement of the elastic members 330 can be set according to design requirements, which are not limited herein.

The elastic member 330 is made of elastic materials with a certain damping effect, and the damping coefficients of the plurality of elastic members 330 are the same, so that the shock absorption effect on the inertial measurement module 322 can be balanced. The materials of the plurality of elastic members 330 may be the same or different. The elastic member 330 includes at least one of the following: a shock absorption ball, a spring, a spring leaf, and a shock absorption gasket, which are not limited thereto.

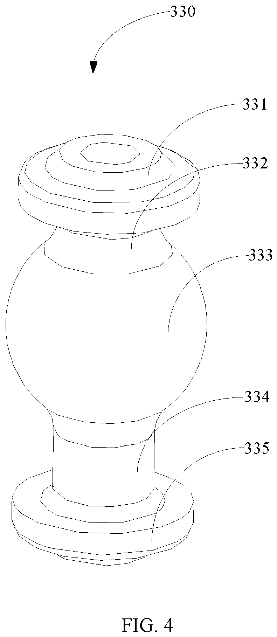

Referring to FIG. 4, the elastic member 330 is a shock absorption ball. The shock absorption ball includes an upper end portion 331, a shock absorption body 333, and an upper neck portion 332 connecting the upper end portion 331 and the shock absorption body 333. The shock absorption body 333 abuts against the protective casing 321 to absorb shock of the protective casing 321, therefore a shock absorption effect on the inertial measurement module 322 is achieved.

The protective casing 321 is provided with a first mounting hole 3218 that fits with the upper neck portion 332. In the illustrated embodiment, the first mounting hole 3218 is provided at the upper casing 3211. In other embodiments, the first mounting hole 3218 may also be provided at the lower casing 3212. The upper neck portion 332 passes through the first mounting hole 3218. The axial height of the upper neck portion 332 is smaller than the depth of the first mounting hole 3218, so that the shock absorption body 333 abuts against the protective casing 321, and the upper end portion 331 and the shock absorption body 333 fit in the protective casing 321. In this way, the shaking of the protective casing 321 relative to the elastic member 330 can be effectively reduced, and a better shock absorption effect can be achieved.

The shock absorption ball further includes a lower end portion 335 and a lower neck portion 334 connecting the lower end portion 335 and the shock absorption body 333. The lower neck portion 334 and the lower end portion 335 are used to connect with the mounting bracket 30, and the shock absorption body 333 abuts against the mounting bracket 30.

The mounting bracket 30 is provided with a second mounting hole 313 that fits with the lower neck portion 334. The lower neck portion 334 passes through the second mounting hole 313. The axial height of the lower neck portion 334 is smaller than the depth of the second mounting hole 313, so that the shock absorption body 333 abuts against the mounting bracket 30, and the lower end portion 335 and the shock absorption body 333 fit in the mounting bracket 30. In this way, the shaking of the protective casing 321 relative to the elastic member 330 can be effectively reduced, and a better shock absorption effect can be achieved.

The shock absorption body 333 may be spherical, approximately spherical, hemispherical, square, or elliptical in cross section, and the like. In the illustrated embodiment, the shock absorption body 333 is spherical, which makes the shock absorption body 333 abut against both the mounting bracket 31 and the inertial measurement unit 32. The vibration is transmitted to the inertial measurement unit 32 through the shock absorption body 333 with the deformation buffer, therefore the effect of shock absorption is achieved. The shock absorption body 333 may be solid or hollow. In one embodiment, the shock absorption body 333 is hollow to get better elasticity and reduce weight at the same time, which helps to realize the lightweight of the UAV.

In the illustrated embodiments, all parts of the shock absorption ball are integrally formed. In other embodiments, the upper end portion 331, the upper neck portion 332, the shock absorption body 333, the lower neck portion 334, and the lower end portion 335 of the shock absorption ball may be separately molded, and then assembled together.

The circuit board assembly 100 further includes a flight control circuit disposed at the circuit board 10. The inertial measurement assembly 30 transmits its inertial measurement data to the flight control circuit.

The flight control circuit is the core component of the UAV, and as the central controller of the UAV, is used to control the main functions of the UAV. For example, the flight control circuit can be used to manage the operation mode of the UAV's control system, to calculate the control rate and generate control signals, to manage the sensors and servo systems of the UAV, to control other tasks and electronic components of the UAV, to exchange data, and to receive instructions from ground to control the UAV's flight and collect the attitude information of the UAV.

The inertial measurement assembly 30 is configured to determine the attitude information of the UAV and transmit the determined attitude information to the flight control circuit, so that the flight control circuit determines subsequent operations. The process of determining the attitude information of the UAV by the inertial measurement assembly 30 includes the accelerometer (i.e., acceleration sensor) detecting the acceleration component of the UAV relative to the geographic vertical, the gyroscope (i.e., velocity sensor) detecting the angle information of the UAV, the analog-to-digital converter receiving the analog variables output by each sensor and converting the analog variables into digital signals, the flight control circuit determining and outputting at least one of the pitch angle, the roll angle, or the yaw angle of the UAV based on the digital, thereby determining the attitude information of the UAV.

In the present disclosure, relational terms such as first and second are only used to distinguish one entity or operation from another entity or operation, and do not necessarily require or imply that there is any such actual relationship or order between these entities or operations. The term "comprising," "including" or any other variation thereof is non-exclusive inclusion, such that a process, method, article, or device that include a series of elements include not only those elements but also other elements that are not explicitly listed, or elements that are inherent to such a process, method, article, or device. Without more restrictions, the elements defined by the sentence "including a ..." do not exclude the existence of other identical elements in the process, method, article, or equipment that includes the elements.

The methods and devices provided by the present disclosure are described in detail above. Specific examples are used to explain the principles and implementation of the present disclosure. The descriptions of the above embodiments are only for facilitating the understanding of the present disclosure; meanwhile, for a person of ordinary skill in the art, according to the present disclosure, there will be changes in the specific implementation and application. In summary, the content of this specification is not a limitation to this disclosure.

The content disclosed in this disclosure contains material which is subject to copyright protection. The copyright is owned by the copyright owner. The copyright owner has no objection to the facsimile reproduction by anyone of the patent document or the patent disclosure as it appears in the official records and archives of the Patent and Trademark Office.

## Claims

1. An unmanned aerial vehicle (UAV) comprising a casing, a circuit board assembly housed in the casing, and a load disposed at the casing, the circuit board assembly includes a circuit board and an inertial measurement assembly provided at the circuit board, the casing includes a first end portion and a second end portion away from the first end portion, wherein the load is provided at the first end portion of the casing, and a first accommodation chamber is provided at the second end portion, the first accommodation chamber is recessed relative to a support plate that is formed in the casing to connect the circuit board, and the inertial measurement assembly is housed in the first accommodation chamber.

2. The UAV of claim 1, wherein the inertial measurement assembly includes a mounting bracket, an inertial measurement unit, and a shock absorption mechanism connecting the mounting bracket and the inertial measurement unit.

3. The UAV of claim 2, wherein the mounting bracket includes a main body that fits with the shock absorption mechanism and a mounting portion provided at an edge of the main body, the mounting portion is used to mount the inertial measurement assembly on the circuit board.

4. The UAV of claim 3, wherein the mounting portion is fixed to the circuit board by fastening, snapping, or bonding.

5. The UAV of claim 3, wherein the circuit board is provided with a stud, the mounting portion and the stud are fixed together by a fastener.

6. The UAV of claim 5, wherein the stud is fixed on the circuit board by reflow soldering.

7. The UAV of claim 5, wherein three studs are provided, of which two studs are near two corners of one end of the circuit board and another stud is provided at a middle position of the circuit board.

8. The UAV of claim 3, wherein the mounting portion protrudes from the main body toward the circuit board, so that there is a certain distance between the main body and the circuit board.

9. The UAV of claim 2, wherein the inertial measurement unit includes a protective casing and an inertial measurement module disposed in the protective casing.

10. The UAV of claim 9, wherein the shock absorption mechanism includes a plurality of elastic members, and the plurality of elastic members are respectively disposed at the edges of the protective casing.

11. The UAV of claim 10, wherein the elastic member includes at least one of a shock absorption ball, a spring, a spring leaf, and a shock absorption gasket.

12. The UAV of claim 10, wherein the elastic member is a shock absorption ball, the shock absorption ball includes an upper end portion, a shock absorption body, and an upper neck portion connecting the upper end portion and the shock absorption body, the upper end portion and the upper neck portion are configured to connect to the protective casing, the shock absorption body abuts against the protective casing to absorb shock of the protective casing.

13. The UAV of claim 12, wherein the protective casing is provided with a first mounting hole that fits with the upper neck portion; wherein the axial height of the upper neck portion is smaller than the depth of the first mounting hole, so that the shock absorption body abuts against the protective casing, and the upper end portion and the shock absorption body fit to the protective casing.

14. The UAV of claim 12, wherein the shock absorption ball further includes a lower end portion and a lower neck portion connecting the lower end portion and the shock absorption body, the lower neck portion and the lower end portion are used to connect with the mounting bracket, and the shock absorption body abuts against the mounting bracket.

15. The UAV of claim 14, wherein the mounting bracket is provided with a second mounting hole that fits with the lower neck portion; wherein the axial height of the lower neck portion is smaller than the depth of the second mounting hole, so that the shock absorption body abuts against the mounting bracket, and the lower end portion and the shock absorption body fit to the mounting bracket.

16. The UAV of claim 9, wherein the protective casing includes an upper casing and a lower casing, the shock absorption mechanism is disposed at the upper casing and the inertial measurement module is disposed between the upper casing and the lower casing.

17. The UAV of claim 1, wherein the circuit board assembly further includes a flight control circuit, the inertial measurement assembly transmits its inertial measurement data to the flight control circuit.

18. The UAV of claim 1, wherein a battery compartment is recessed in a middle position between the first end portion and the second end portion of the casing to receive a battery.
